# EUROPEAN PATENT SPECIFICATION

(11) **EP 1 688 928 B1**
(45) Date of publication and mention of the grant of the patent: **19.08.2009**
(21) Application number: 06002552.5
(22) Date of filing: 08.02.2006
(51) Int. Cl.: G11B 7/135, G11B 19/12

(54) **Optical disc device**
Optisches Plattenlaufwerk
Dispositif de disque optique

(30) Priority: 08.02.2005 JP 2005031591
(43) Date of publication of application: 09.08.2006
(73) Proprietor: Funai Electric Co., Ltd., Daito-shi Osaka 574-0013 (JP)
(72) Inventor: Iwamoto, Atsushi, Daito-shi, Osaka 574-0013 (JP)
(74) Representative: Beetz & Partner

(56) References cited:
- EP-A- 1 195 753
- EP-A- 1 469 463

## Description

### BACKGROUND OF THE INVENTION

### Field of the Invention

The present invention relates to an optical disc device. In particular, the present invention relates to an optical disc identifying technique in the optical disc device.

### Description of the Prior Art

In recent years, development has been progressed in order to use plural types of optical discs such as CD (Compact Disc), DVD (Digital Versatile Disc) and BD (Blu-ray Disc) with a single optical disc device. It is necessary of such an optical disc device to identify the type of optical disc to be inserted.

As an optical disc identifying technique, for example, there is a way in which an inserted optical disc is illuminated sequentially with light having each of predetermined wavelengths (for example, 750 nm, 650 nm, and 405 nm), which are set to respective types of optical discs (CD, DVD, BD), while being sequentially changed over, to thereby determine whether or not the inserted optical disc is operable.

As another optical disc identifying technique, JP-A 2004-111028 discloses a technique in which a depth of an information surface is determined based on symmetry of a waveform of a signal representing a quantity of light reflected from an optical disc to thereby identify a type of the optical disc (see paragraphs [0068] and [0076] of JP-A 2004-111028).

In addition, JP-A 10-49885 (1998) and JP-A 10-55602 (1998) disclose a technique in which waveform information of focus response signals (a focus error signal, a sub-beam sum signal, and a combination of these signals) on an optical disc to be identified is obtained with a photoelectric conversion means and is compared with waveform information of focus response signals acquired in advance for numerical apertures (NA) of various types of optical discs (that is, acquired in a DVD mode and a CD mode). Thus, a type of the optical disc is identified (see paragraphs [0027], [0033] to [0062], and [0072] to [0073] of JP-A 10-49885 (1998), and paragraphs [0029], [0035] to [0064], and [0074] to [0075] of JP-A 10-55602 (1998)). JP-A 10-49885 (1998) and JP-A 10-55602 (1998) disclose that a focus control means is forcibly operated in a predetermined state and NAs are changed over while rotation of an optical disc is ceased, and focus response signals of a photoelectric conversion means, which vary in accordance with the operations, are obtained.

According to the above-mentioned technique in which it is determined whether or not an optical disc can be operated by sequentially changing over illuminating light, in some case, all light is called for that can be emitted depending on an order of emitting light having predetermined wavelengths. In such a case, it takes a longer time for identifying the type of disk.

Since the technique disclosed in JP-A 2004-111028 uses the symmetry of a waveform of a signal representing a quantity of light reflected from an optical disc, that is, since information on the whole of the signal waveform is used, it is considered that noise included in part of the signal reduces accuracy in disc identification. In a case where information on the whole of the signal waveform is used, it is considered that, to cope with the processing load required for disc identification, for example, a scale of circuitry or software will be unavoidably increase. The same is considered to be true with the techniques disclosed in JP-A 10-49885 (1998) and JP-A 10-55602 (1998) in which the waveform information of the focus response signal is compared with the signals prepared in advance.

EP 1 469 463 A (cf. the preamble of claim 1) describes an optical disc drive for reading and writing data from or onto an optical disc wherein the optical disc drive can recognize types of optical discs after starting up. EP 1 195 753 A describes an objective lens in an optical pickup apparatus for providing a device for using different types of optical discs in a single disc drive.

### SUMMARY OF THE INVENTION

The present invention has been made to solve the aforementioned problems, and it is an object of the present invention to provide an optical disc device capable of realizing a shorter identification time for an optical disc and achieving accurate disc identification with a smaller processing load.

In order to achieve the aforementioned object, the present invention provides an optical disc device according to claim 1.

According to this configuration, light reflected from the optical disc is divided into central light and peripheral light, the time difference at a zero level between the central light focus error signal and the peripheral light focus error signal obtained from the central light and the peripheral light, respectively is detected, and a type of the optical disc is identified based on the time difference, which makes it possible to identify the optical disc by illuminating light only once. Hence, disc identification can be effected in a shorter time as compared with the technique in which an optical disc is illuminated with light while the light is sequentially switched among ones having predetermined wave lengths corresponding respectively to the types of optical discs to thereby determine whether or not the optical disc can be operated. With such an advantage, since reproduction/recording can be done quickly after insertion of the optical disc, a user can enjoy better operability. With the use of the time difference at a zero level between the central light focus error signal and the peripheral light focus error, an influence of noise is hard to be received as compared with the technique in which a disc is identified using the whole of a waveform of the focus error signal. Therefore, accurate disc identification can be performed. Since a disc is identified based on the time difference, a processing load for disc identification is smaller as compared with the technique in which the whole of a waveform of the focus error signal is used.

The present invention also provides an optical disc device which comprises a light source; an objective lens for illuminating an optical disc with light from the light source; light division means for dividing the light reflected from the optical disc into central light transmitted through a central part of the objective lens and peripheral light transmitted through a peripheral part of the objective lens; comparison means for comparing the central light and the peripheral light with each other to output a result of the comparison; and disc identification means for identifying a type of the optical disc based on the result of the comparison.

With this configuration, since light reflected from the optical disc is divided into central light and peripheral light and compared with each other to thereby determine a type of the optical disc based on the result of the comparison, a single light illumination enables identification of a disc. Hence, disc identification can be effected in a shorter time as compared, for example, with the technique in which an optical disc is illuminated with light while the light is sequentially switched among ones having predetermined wave lengths corresponding respectively to the types of optical discs to thereby determine whether or not the optical disc can be operated. Thus, reproduction/recording can be done quickly after the optical disc is inserted and, thereby, a user can enjoy better operability.

The optical disc device further comprises focus control means for performing a focusing operation for moving, in an optical axis direction, a focus position of the light transmitted through the objective lens, wherein the comparison means includes focus time difference detection means for outputting, as the result of the comparison in the focusing operation, a time difference between a time point at which a focus of the central light coincides with an information recording surface of the optical disc and a time point at which a focus of the peripheral light coincides with the information recording surface, and the disc identification means identifies a type of the optical disc based on the time difference.

With this configuration, since disc identification is performed by using the time difference between a time point at which a focus of the central light coincides with the information recording surface of the optical disc and a time point at which a focus of the peripheral light coincides with the information recording surface, an influence of noise is hard to be exerted as compared with a technique in which a disc is identified using all information across the entire period of the focusing operation (for example, the whole of a waveform of the focus error signal). Hence, disc identification can be exactly done. Since the disc is identified based on the time difference, a processing load for disc identification is smaller as compared with the above-mentioned technique in which all information across the entire period during the focusing operation is used.

Preferably, the objective lens has a numerical aperture of 0.8 or, more. Therefore, since the objective lens is a so-called high numerical aperture (high NA) lens, the time difference increases due to a large spherical aberration. Therefore, disc identification can be more exactly performed.

Preferably, the focusing operation is a focus search operation. Hence, since disc identification is performed during the focus search operation, an additional separate focusing operation for disc identification is not required. Therefore, the time from the insertion of an optical disc until reproduction/recording can be further shortened, thereby providing a user with better operability.

Note that JP-A 2004-111028 further discloses a technique in which a depth of the information surface is detected based on an output signal level from a focus drive generator in a state where a level of a focus error signal takes 0 (zero) (zero cross), that is in a state where a focal point of light beams coincides with the information surface of the optical disc, and a type of the optical disc is determined based on the detected depth (see paragraphs [0008] to [0009] of JP-A 2004-111028).

In addition, JP-A 2004-253119 discloses a technique in which a focus search operation is performed in a setting corresponding to a high reflectance disc to thereby determine whether the inserted optical disc is a high reflectance disc or a low reflectance disc by the height of a level of a signal that corresponds to a quantity of light reflected from the disc (a sum signal of photoelectric conversion signals from quartered light receiving surfaces of a photodetector) (see paragraphs [0099] to [0103] of JP-A 2004-253119). Furthermore, JP-A 2004-253119 discloses a technique in which attention is paid to generation of a phase difference in a push-pull signal (tracking error signal) and a pull-in signal (a total light quantity signal, that is the above-mentioned sum signal) obtained as reflected light information according to a depth of a groove (pit) formed in a disc to thereby determine the phase difference for identification of the disc (see paragraphs [0104] to [0115] of in JP-A 2004-253119).

JP-A 2004-127473 discloses a technique in which, when the optical recording medium is inserted, an optical recording medium is identified based on the level of a returned light quantity during a focus search operation by turning on and illuminating with blue or red light. (see paragraph [0077] of JP-A 2004-127473).

JP-A 2002-373441 discloses, as a method for identifying a type of optical disc, a method in which a hole for identification is formed in a cartridge accommodating an optical disc and the hole is detected for identification, a method in which an optical disc is identified by a shape of the cartridge, and a method in which a single layer disc or a double layer disc is determined by a quantity of light reflected from an optical disc (see paragraph of [0055] of JP-A 2002-373441).

JP-A 2003-99970 discloses a technique in which a light pick-up head is moved to a predetermined position on an inner track of an optical disc, thereafter a control section controls an LD (semiconductor laser diode) driver to cause the LD to emit light with a power for reading, and in succession the inserted optical disc is identified with an optical disc identifying mechanism (see paragraph [0062] of JP-A 2003-99970).

JP-A 2004-311004 discloses a technique in which N (N ≥ 2) focus optical systems corresponding to N optical discs having disc substrates with each thickness different from another are provided and a difference in thickness between disc substrates is determined using laser light reflected by a disc (see paragraph [0005] of JP-A 2004-311004). Further, JP-A 2004-311004 discloses a technique in which an objective lens is moved almost vertically relative to an information carrier to thereby move a focal point of light beams in the vicinity (above or below) of an information surface and a signal corresponding to the result of detection of light reflected from the information carrier is compared with a predetermined value to thereby identify a type of the information carrier. As for this technique, JP-A 2004-311004 also discloses a method in which identification is performed at a predetermined numerical number or while numerical apertures are changed over, a method in which identification is performed at a predetermined numerical aperture and wavelength or while numerical apertures and wavelengths are changed over, and a method in which identification is performed at a predetermined numerical aperture, wavelength, and spherical aberration correction quantity or while numerical apertures, wavelengths, and spherical aberration correction quantities are changed over (see paragraphs [0066] to [0074], [0091] to [0097], [0110] to [0113], and [0127] to [0130] of JP-A 2004-311004).

JP-A 10-55599 (1998) discloses a technique in which in a case where a focus search signal for CD is detected in a state where a liquid crystal shutter is off (in a set state in reproduction of DVD) in an optical disc player system having a pick-up unit of a liquid crystal shutter type, a disc is identified based on the fact that a signal level thereof is lower than the same signal for DVD (see paragraphs [0005] to [0010] of JP-A 10-55599 (1998)). JP-A 10-55599 (1998) also discloses a technique in which, in a disc player system having a light pick-up unit of a hologram element type, light beams condensed by the light pick-up unit are received by quartered photodiodes, and a disc is identified using the fact that a level of a push-pull signal obtained by amplifying a difference between signals outputted from respective two pairs of photodiodes disposed symmetrically with respect to the center in the track direction of the quartered photodiodes is different between DVD and CD (paragraphs [0023] to [0026] and [0029] to [0030] of JP-A 10-55599 (1998)).

In addition, JP-A 11-232768 (1999) discloses a technique in which a time difference from the time when light reflected from a disc substrate surface is detected by moving an objective lens up and down relative to a disc until the time when light reflected from a disc signal surface of the disc is detected to thereby calculate a thickness from the disc surface to the signal surface from the time difference for identification of the disc (see paragraphs [0004] to [0005] of JP 11-232768 (1999)). JP-A 11-232768 (1999) also discloses a method in which a disc is identified based on a difference in intensity of signals reflected from the disc, and a method in which pit depths and track pitches are different according to types of optical discs. According to these methods, a tracking error signal is detected in a focused state to thereby identify a type of the disc using the signal (see paragraph [0006] of JP-A 11-232768 (1999)). JP-A 11-232768 also discloses a technique in which reproduction signal levels are compared with each other in a focused state (see paragraph [0006] of JP-A 11-232768 (1999)). JP-A 11-232768 (1999) also discloses a technique for disc identification based on the fact that, in a case where a thickness of a disc is changed, a spot on a photodetector becomes spread even in the most condensed state due to a spherical aberration caused by a design condition of an objective lens as compared with a case where a disc thickness is standard. To be specific, an amplitude of a focus error signal obtained in a focus search operation and an amplitude of a total sum signal are measured and compared with each other, and it is determined whether or not the amplitude of the focus error signal is larger or smaller than the amplitude of the total sum signal relative to a predetermined threshold level to thereby determine a thickness of the disc (see paragraphs [0014] and [0028] of JP-A 11-232768 (1999)).

Any of the aforementioned conventional techniques, however, does not adopt a process in which light reflected from an optical disc is divided into central light transmitted through a central part of an objective lens and peripheral light transmitted through a peripheral part of the objective lens, and the central light and the peripheral light are compared with each other to thereby identify a type of the optical disc. Moreover, there is no use of both the time difference at zero level between a central light focus error signal and a peripheral light focus error signal and the time difference between a time point at which a focus of central light coincides with an information recording surface of the optical disc and a time point at which a focus of peripheral light coincides with the information surface.

Note that in JP-A 2004-127473, attention is paid to a phenomenon that in a case where a spherical aberration occurs in a returned light flux having been transmitted through a detection lens, "wavefront delay" relative to a reference wavefront of the returned light flux exists concentrically with the optical axis as a center, and a position at which a delayed wavefront condenses is defocused relative to a condensed point the reference wavefront. Based on this phenomenon, JP-A 2004-127473 discloses a technique in which "state of a wavefront in a spherical aberration" is obtained by detecting a difference between the delayed wavefront and the advanced wavefront to thereby detect a focus state (see paragraphs [0070] to [0073] of JP-A 2004-127473). To be specific, a hologram is disposed as a light flux dividing means, and a light receiving element that has a halved light receiving region is used so that divided light fluxes can be separately detected. However, the technique is to obtain a signal by which if occurrence of a spherical aberration is known, control a liquid crystal element by this signal, and thereby correct or alleviate the spherical aberration. On the contrary, that signal is not a signal used for disc identification. Furthermore, this technique is to use a level of the signal, but neither to use the time difference at zero level between an central light focus error signal and a peripheral light focus error signal nor to use the time difference between a time point at which a focus of central light coincides with an information recording surface of an optical disc and a time point at which a focus of peripheral light coincides with the information recording surface.

According to the present invention, as described above, since an identification time for an optical disc can be shortened to thereby enable reproduction/recording to be performed quickly after the optical disc is inserted, a user can enjoy a better operability. Also, according to the present invention, exact disc identification can be realized with a smaller processing load.

### BRIEF DESCRIPTION OF THE DRAWINGS

This and other objects and features of the present invention will become clear from the following description, taken in conjunction with the preferred embodiments with reference to the accompanying drawings in which:
Fig. 1 is a schematic view for describing the principles of the present invention;
Fig. 2 is a block diagram of an optical disc device according to an embodiment of the present invention;
Fig. 3 is a schematic view of a hologram (light division means) of the optical disc device according to the embodiment of the present invention;
Fig. 4 is a block diagram of the optical disc device according to the embodiment of the present invention;
Figs. 5A and 5B are schematic views of photodetectors of the optical disc device according to the embodiment of the present invention;
Fig. 6 is a schematic view for describing generation of a central light focus error signal and a peripheral light focus error signal in the optical disc device according to the embodiment of the present invention;
Fig. 7 is a waveform diagram of the central light focus error signal and the peripheral light focus error signal in the optical disc device according to the embodiment of the present invention; and
Fig. 8 is a block diagram of the optical disc device according to the embodiment of the present invention.

### DESCRIPTION OF THE PREFERRED EMBODIMENT

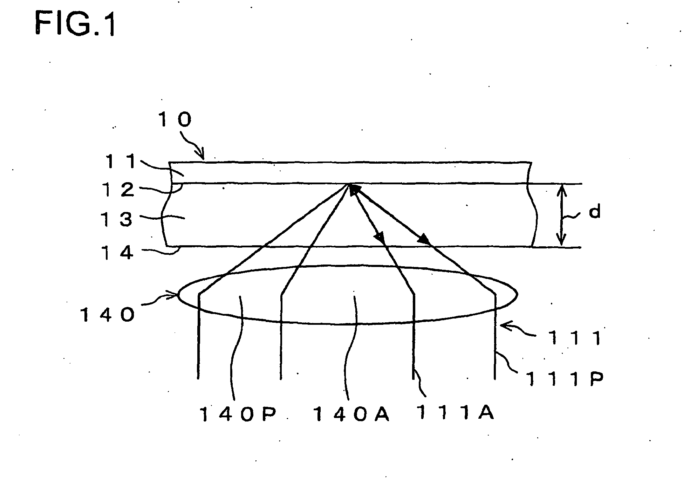

First of all, in Fig. 1, there is shown a schematic view for describing the principles of the present invention. A basic structure of an optical disc 10 such as CD (Compact Disc), DVD (Digital Versatile Disc), or BD (Blu-ray Disc), as shown in Fig. 1, includes a substrate 11, an information recording surface 12 on the substrate 11, and a protective layer 13 on the information recording surface 12. Reproduction/recording from or onto the optical disc 10 is performed by illuminating the information recording surface 12 with light 111 through an objective lens 140 from the protective layer 13 side.

When in reproduction/recording from or onto the optical disc 10, it is necessary to condense the light 111 to coincide the focus with the information recording surface 12 at which time it is further necessary to suppress or eliminate a so-called spherical aberration. The reason therefor is that the spherical aberration renders servo control such as for focusing unstable and, as a result, reproduction/recording from or onto the optical disc 10 cannot be properly performed. The term, spherical aberration, means a deviation or a value thereof, in the focus position in the optical axis direction, between light 111 A (hereinafter, referred to as "central light") transmitted through a central part 140A of the objective lens 140 (in other words, a part including the center and in the vicinity thereof) in the light 111 and light 111P (hereinafter, referred to as "peripheral light") transmitted through a peripheral part 140P of the objective lens 140 (a part surrounding the central part 140A) in the light 111. Note that Fig. 1 shows a state where correction is applied to the spherical aberration and as a result, no spherical aberration occurs.

A spherical aberration or the value thereof is, if a refractive index of the protective layer 13 of the optical disc 10 is indicated with n, a thickness of the protective layer 13 with d, a numerical aperture of the objective lens 140 with NA and a wavelength of the light 111 with λ, generally given by an expression of ((n² - 1 )/(8n³)) x (d x NA⁴/λ). According to the expression, it is considered that, with a lens having a higher numerical aperture like the objective lens 140 used for BD is used, a spherical aberration becomes larger. Because, with a higher numerical aperture, an incidence angle at which incident light striking the optical disc 10 becomes deeper, and a difference in optical path between the central light 111A and the peripheral light 111P (see a portion including arrow marks in Fig. 1) becomes larger.

According to the aforementioned expression, with a larger thickness of the protective layer 13, a spherical aberration becomes larger. With this phenomenon applied, consideration is given to thickness values d of protective layers 13, which are actually 0.1 mm for BD, 0.6 mm for DVD, and 1.2 mm for CD, spherical aberration values of the optical discs increase in the ascending order of BD, DVD, and CD (BD < DVD < CD) provided that the other elements in the above-mentioned expression are fixed. By this, it is possible to determine whether the optical disk 10 is BD, DVD, or CD according to the amount (magnification) of the spherical aberration.

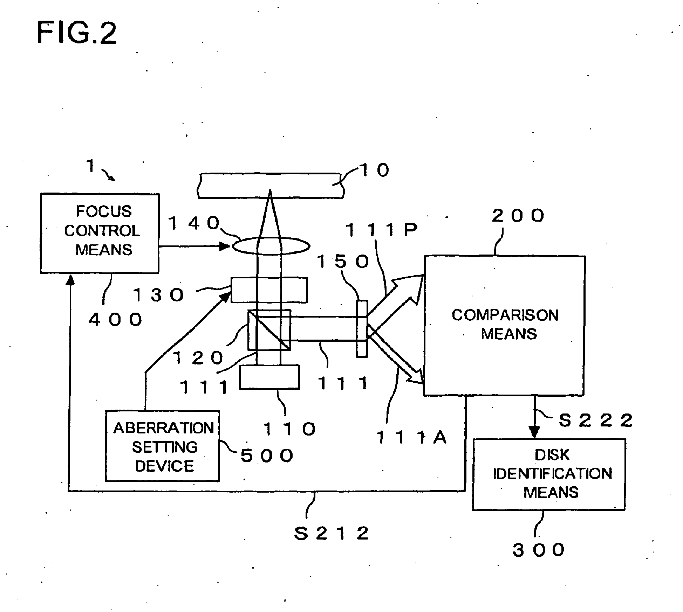

Fig. 2 shows a block diagram of an optical disc device 1 according to an embodiment of the present invention. Note that the optical disc 10 is also shown in Fig. 2 for the sake of description. The optical disc device 1, as shown in Fig. 2, includes a light source 110, a beam splitter 120, an aberration adjuster 130, an objective lens 140, a hologram 150 as a light division means, a comparison means 200, a disc identification means 300, a focus control means 400, and an aberration setting device 500.

To be detailed, the light 111 emitted from the light source 110 is transmitted through the beam splitter 120, the aberration adjuster 130 and the objective lens 140 in this sequence, and, thereafter, the optical disc 10 is illuminated with the light, while the light 111 reflected from the optical disc 10 (to be more precise, reflected from the information recording surface 12 (see Fig. 1)) is transmitted through the objective lens 140 and the aberration adjuster 130 in this sequence, reflected by the beam splitter 120, then transmitted through the hologram 150, and guided to the comparison means 200. Here, the light source 110, the beam splitter 120, the aberration adjuster 130, the objective lens 140, and the hologram 150 are so arranged as to perform the above-mentioned function.

The light source 110 is configured so that laser light 111 for CD with a wavelength of 750 nm, laser light 111 for DVD with a wavelength of 650 nm, and laser light 111 for BD with a wavelength of 405 can be selectively emitted. The beam splitter 120 transmits the light 111 propagating to the side of the objective lens 140 from the side of the light source 110. On the other hand, the light in the reverse direction, that is the light 111 propagating to the side of the light source 110 from the side of the objective lens 140 is reflected to thereby alter the direction of propagation. The aberration adjuster 130 consists of, for example, an expander lens having two lenses. A spacing between the two lenses is adjusted to thereby reduce or eliminate a spherical aberration, and the spacing is set by the aberration setting device 500. A numerical aperture (NA) of the objective lens 140 is 0.8 or more, which is classified into the so-called high NA lens. The objective lens 140 is disposed under control of the focus control means 400 so that the objective lens 140 can be moved in the direction of the optical axis. The objective lens 140 is moved to thereby displace a focus position of the light 111 having been transmitted through the objective lens 140 in the direction of the optical axis (such a movement and control thereof are hereinafter referred to as a "focusing operation") and, thereby, a focus state of the light 111 on the optical disc 10 changes.

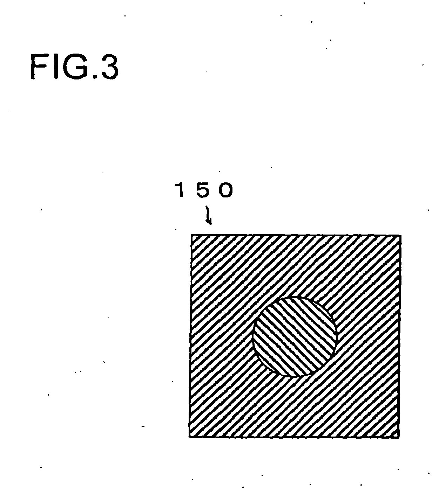

Fig. 3 shows a schematic plan view of the hologram 150. A diffraction pattern of the hologram 150, as shown in Fig. 3, has a difference in formation direction between a part facing the central part 140A (see Fig. 1) of the objective lens 140 and a part facing the peripheral part 140P (see Fig. 1) of the objective lens 140, and Fig. 3 shows a difference by 90° in the formation direction. With such a hologram 150, the light 111 reflected by the optical disc 10 and guided by the beam splitter 120 can be divided into the central light 111A transmitted through the central part 140A of the objective lens 140 and the peripheral light 111P transmitted through the peripheral part 140P of the objective lens 140 (see Fig. 2).

Again, in Fig. 2, the comparison means 200 receives the central light 111A and the peripheral light 111P separately and compares the central light 111A and the peripheral light 111P with each other to thereby output a signal 222 concerning a result of the comparison to the disc identification means 300. The disc identification means 300 identifies a type of the optical disc 10 based on the comparison result signal S222. Detailed description will be given of the comparison means 200 and the disc identification means 300 later. Note that the comparison means 200 generates a signal S212 described later, which is used in a focusing operation (for example, a focus search operation) of the objective lens 140 controlled by the focus control means 400.

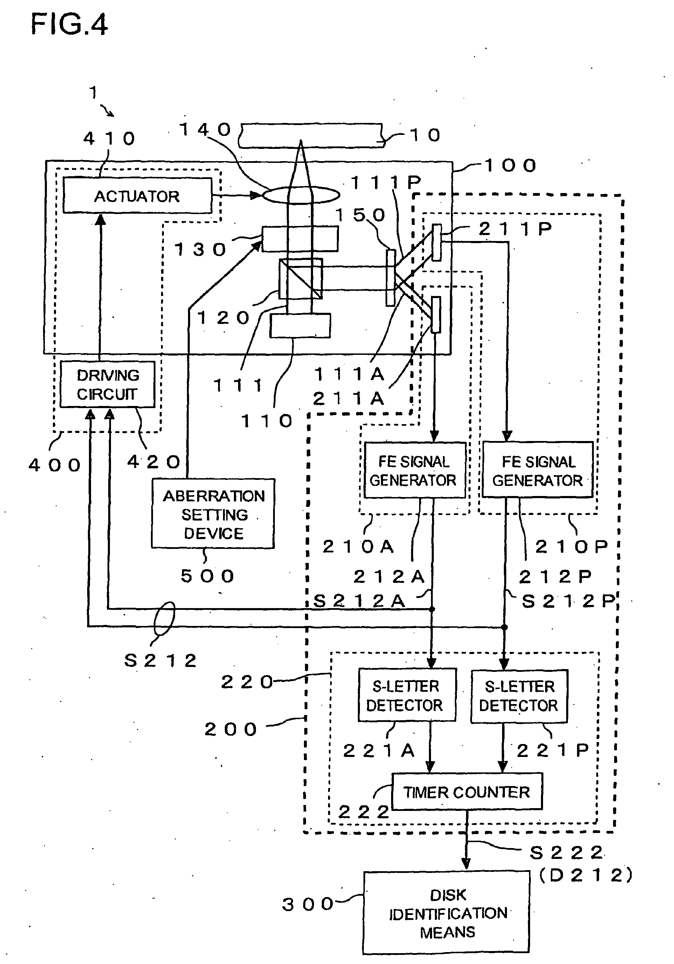

Next, Fig. 4 shows a more specific block diagram of the optical disc device 1. The focus control means 400, as shown Fig. 4, includes an actuator 410 and a driving circuit 420. The actuator 410 is a means for moving the objective lens 140 in the optical axis direction by using, for example, an electromagnetic force. Fig. 4 shows a schematic view in order to avoid complication of the drawing. The driving circuit 420 drives and controls the actuator 410 based on the signal S212. With such a configuration, the focus control means 400 performs a focusing operation (in which a focus position of the light 111 having been transmitted through the objective lens 140 is moved in the direction of the optical axis).

The comparison means 200, as shown in Fig. 4, includes a central light focus error signal generation means 210A, a peripheral light focus error signal generation means 210P, and a time difference detection means 220. Note that in the following description and drawings, an abbreviated expression "FE" is also used for "focus error".

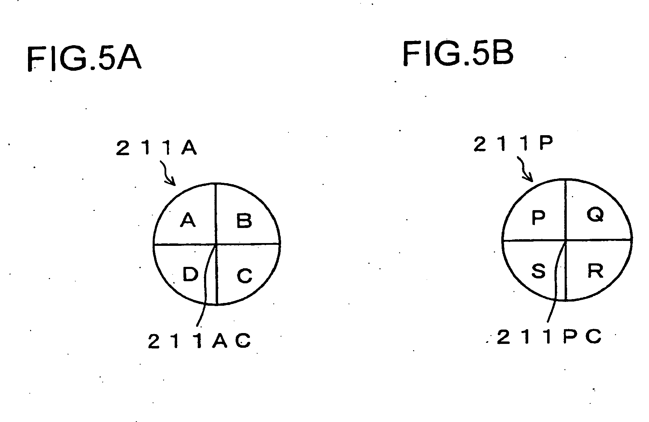

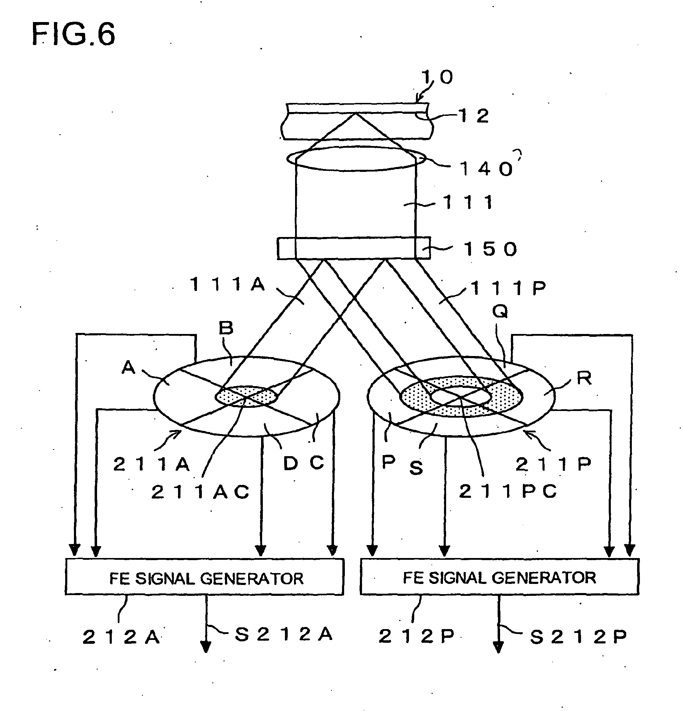

The central light FE signal generation means 210A includes, for example, a photodetector 211 A consisting of photodiodes, and an FE signal generator 212A to generate the central light FE signal S212A from the central light 111A obtained by dividing light with the hologram 150 in accordance with a so-called astigmatism method. Here, Fig. 5A shows a schematic plan view of the photodetector 211A, and Fig. 6 shows a schematic view of the optical disc device 1 for describing a way to generate the central light FE signal S212 and the peripheral light FE signal S212 which will be described later.

A light receiving surface of the photodetector 211A, as shown in Fig. 5A, is equally divided into four by dividing lines passing through the center 211AC thereof. In other words, the photodetector 211 A has four light receiving surfaces A, B, C, and D arranged in a matrix (or two dimensionally) around the center 211AC. The photodetector 211A, as shown in Fig. 6, is disposed so that the optical axis of the central light 111A passes through the center 211AC of the light receiving surface, and receives the central light 111A. The respective light receiving surfaces A, B, C, and D output signals corresponding to the received light quantity. Note that Fig. 4 shows the output signals A, B, C, and D (for the sake of simplified description, the marks are the same as those for the light receiving surfaces) from the respective light receiving surfaces A, B, C, and D are collected as one output signal from the photodetector 221A in order to avoid complication of the drawing.

The FE signal generator 212A, as shown in Fig. 6, obtains signals from the photodetector 211A, that is, the output signals A, B, C, and D from the respective light receiving surfaces A, B, C, and D to thereby generate the central light FE signal S212A from the signals A, B, C, and D. According to a so-called an astigmatism method, the central light FE signal 212A is given by a difference {(A + C) - (B + D)} between the sum (A + C) of output signals from the light receiving surfaces A and C that are arranged adjacent to each other so as to sandwich the center 211AC of the light receiving surface therebetween and the sum (B + D) of output signals from the light receiving surfaces B and D that are arranged adjacent to each other so as to sandwich the center 211AC of the light receiving surface therebetween. The FE signal generator 212A generates the central light FE signal S212A according to such an arithmetic operation.

Again in Fig. 4, the peripheral light FE signal generation means 210P, in a similar way to that of the central light FE generation means 210A, includes a photodetector 211P and an FE signal generator 212P and generates the peripheral light FE signal S212P from the peripheral light 111P of the light which is obtained by division with the hologram 150 in accordance with the so-called astigmatism method. Fig. 5B shows a schematic plan view of the photodetector 211P. The photodetector 211P, as shown in Fig. 5B, consists of quartered diodes formed in a similar manner as those in the photodetector 211A shown in Fig. 5A. Four light receiving surfaces P, Q, R, and S are, as shown in Fig. 6, disposed so that the four light receiving surfaces P, Q, R, and S assume a positional relationship similar to that of the four light receiving surfaces A, B, C, and D, and that the optical axis of the peripheral light 111P passes through a center 211 PC of the light receiving surface of the photodetector 211P so as to receive the peripheral light 111P. The FE signal generator 212P obtains signals from the photodetector 211 P, that is, output signals P, Q, R, and S (for the sake of simplified description, the marks are the same as the light receiving surfaces) from the respective light receiving surfaces P, Q, R, and S of the photodetector 212P and generates the peripheral light FE signal S212P in accordance with an arithmetic operation of {(P + R) - (Q + S)} in the similar manner as that of the aforementioned FE signal generator 212A.

Note that, as shown in Fig. 4, the central light FE signal 212A and the peripheral light FE signal 212P are transmitted not only to the time difference detection means 220, but also to the driving circuit 420 of the focus control means 400. In the description here, the central light FE signal S212A and the peripheral light FE signal 212P are collectively referred to as the signal S212 (see Figs. 2 and 4).

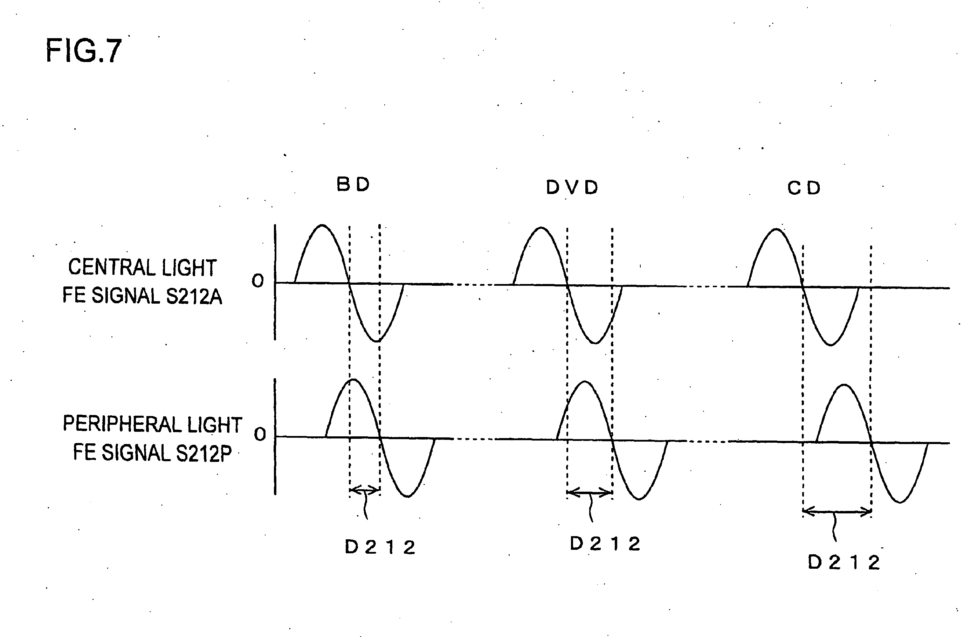

Fig. 7 shows waveforms of the central light FE signal S212A and the peripheral light FE signal S212P in a focusing operation (that is, in a case where a focus position of the light 111 having been transmitted through the objective lens 140 is moved in the optical axis direction by movement of the objective lens 140). Fig. 7 shows the waveforms for BD, DVD and CD respectively. Note that in the waveform diagram, the ordinate is used for plotting the level of a signal, while the abscissa is assigned to time or a position of the objective lens 140 in a focusing operation (see Fig. 2).

The central light FE signal S212A and the peripheral light FE signal S212P, as shown in Fig. 7, are both depicted as so-called S-letter waveform regardless of a type of the optical disc 10, while the central light FE signal S212A and the peripheral light FE signal S212P are deviated from each other in time axis (abscissa) direction, that is in terms of time, for the same type of optical disc 10. A deviation value D212 is especially different according to a type of the optical disc 10, and the deviation value increases in the ascending order of BD, DVD, and CD (BD < DVD < CD). In this situation, if consideration is given to a phenomenon in which, as described earlier the spherical aberration becomes larger and increases in the ascending order of BD, DVD, and CD (BD < DVD < CD) as the thickness of the protective layer 13 increases, it is understood that the deviation value D212 is related to a magnitude of the spherical aberration. Therefore, in the optical disc device 1, attention is paid to a change in the deviation value D212 to thereby identify a type of the optical disc 10. Then, description will be given of the time difference detection means 220 for detecting the deviation value D212.

Again in Fig. 4, the time difference detection means 220 detects the deviation value D212 between the central light FE signal S212A and the peripheral light FE S212P (see Fig. 7) based on a difference between a time point at which the central light FE signal S212A takes a "0" level (zero level) and a time point at which the peripheral light FE signal S212P takes a zero level. Note that the time difference is also denoted by D212.

The term, the time at a zero level, means a zero level in the middle of the S-letter waveform, and the zero level occurs when the focus of the light 111A or the light 111P coincides with the information recording surface 12 (see Fig. 1). That is, focuses of the light 111A and the light 111P are deviated in the optical axis direction in a state where a spherical aberration occurs. When the objective lens 140 is moved in the optical axis direction in this state, there is a time difference caused between the time when the focus of the light 111A coincides with the information recording surface 12 and the time when the focus of the light 111P coincides with the information recording surface 12 (see Fig. 1). It is also understood from the aforementioned description that the deviation value D212 in time at a zero level is greatly related to the magnitude of the spherical aberration.

The time difference detection means 220, as shown in Fig. 4, includes S-letter detectors 221A and 221P each serving as an S-letter detection means, and a timer counter 222. The S-letter detector 221A obtains the central light FE signal S212A, detects a time point at which the signal S212A takes a zero level, and outputs a trigger signal to the timer counter 222 in synchronism with the detected timing. The S-letter detector 221P, similarly, obtains the peripheral light FE signal S212P, detects a time point at which the signal S212P takes a zero level, and outputs a trigger signal to the timer counter 222 in synchronism with the detected timing.

The timer counter 222 starts measuring time upon reception of the trigger signal from the S-letter detector 221 A and stops measuring time upon reception of the trigger signal from the S-letter detector 221P to thereby obtain a time difference in reception, that is, the time difference D212 at zero level between the central light FE signal S212A and the peripheral light FE signal S212. Alternatively, the timer counter 222 obtains the time difference D212 by calculating a difference between count values captured at the trigger signals. The time difference D212 is outputted to the disc identification means 300 as a signal S222. Note that there is also a case in which trigger signals from the S-letter detectors 221A and 221P are fed in reverse order to the above-mentioned order depending on the movement direction of the objective lens 140 in a focusing operation.

In this way, the comparison means 200 including the central light FE signal generation means 210A, the peripheral light FE signal generation means 210P, and the time difference detection means 220 compares central light 111A and peripheral light 111P with each other, to be more precise, compares the time at zero level of the central light FE signal S212A obtained from the central light 111A and the at zero level of the peripheral light FE signal S212P obtained from the peripheral light 111P, thereby obtains the time difference D212 that represents a value or data associated with a spherical aberration, and outputs the time difference D212 as a comparison result signal S222.

The disc identification means 300 receives a signal S222 from the timer counter 222 of the time difference detection means 220 and identifies a type of the optical disc 10 based on the signal S222, that is, the time difference D212. For example, comparison is performed between the time difference D212 received from the time difference detection means 220 and the time difference D212 obtained for each type of optical discs 10 (CD, DVD, BD, and the like) to thereby enable the type of optical disc 10 to be identified. Such a comparison function can be realized with circuitry such as a comparator, or software.

Note that, since the time difference D212 (see Fig. 7) assumes 0 (zero) in a state where no spherical aberration occurs, it is necessary to generate a spherical aberration by turning off the function of the aberration adjuster 130 when an optical disk is identified.

In order to obtain S-letter waveforms (see Fig. 7) for the central FE signal S212A and the peripheral light FE signal S212P, the optical disc 10 is not required to rotate, but the focusing operation, that is, an operation in which focus positions of the central light 111A and the peripheral light 111P are moved in the optical axis direction, is required. In this regard, the optical disc device 1 performs the aforementioned disc identification using central light 111A and peripheral light 111P obtained in a so-called focus search operation which is one of focusing operations. The term, focus search operation, refers to a focusing operation performed, after the optical disc 10 is inserted and prior to reproduction/recording, for searching a focus position or a range in which the S-letter waveform advents or for detecting an aberration to set the aberration adjuster 130 and the aberration setting device 500. Hence, the optical disc device 1 can shorten the time consumed between insertion of an optical disc and reproduction/recording as compared with a case where a focusing operation is performed after a focus search operation for disc identification independently of the focus search operation. As a result, the optical disc device 1 provides a user with excellent operability.

Note that in the optical disc device 1 of Fig. 4, the comparison means 200 includes the photodetectors 211 A and 211P, the FE signal generators 212A and 212P, the S-letter detectors 221A and 221P, and the timer counter 222. The focus control means 400 includes the actuator 410 and the driving circuit 420. In the optical disc device 1 of Fig. 4, a so-called optical head 100 is so configured as to include the light source 110, the beam splitter 120, the aberration adjuster 130, the objective lens 140, the hologram 150, the photodetectors 211 A and 211 P, and the actuator 410. Therefore, the photodetectors 211 A and 211P are shared as constituents by the comparison means 200 and the optical head 100, and the actuator 410 is shared as a constituent by the focus control means 400 and the optical head 100.

The optical disc device 1, as described above, divides the light 111 reflected from the optical disc 10 into the central light 111A and the peripheral light 111P, compares the central light 111A and the peripheral light 111P with each other, and identifies the disc based on a result of the comparison. To be more specific, the optical disc device 1 detects the time difference D212 at zero level between the central light FE signal S212A and the peripheral light FE signal S212P from the central light 111A and the peripheral light 111P, and identifies the type of the optical disc 10 based on the time difference D212. Therefore, it is possible to identify the type of disc with a single light illumination. Note that any wave length can be used for the illumination. In contrast thereto, the technique in which an optical disc 10 inserted is illuminated with light with each of predetermined wavelengths provided to respective types of optical discs 10 while the light is sequentially changed over from one wavelength to another to thereby determine whether or not the optical disc 10 is operable takes a time proportional to the number of light with wavelengths to be used. Furthermore, there may be a case in which all of the light with different wavelengths should be used depending on the illumination order. Therefore, the optical disc device 1 can perform the disc identification in a shorter time as compared with the technique in which illuminating light with different wavelengths are sequentially changed over for identifying the disk. According to the present invention, since reproduction/recording can be performed quickly after the optical disc 10 is inserted, the optical disc device 1 provides a user with excellent operability.

Moreover, since the optical disc device 1 uses the time difference D212 at zero level between the central light FE signal S212A and the peripheral light FE signal S212P for disc identification. This means that, since the optical disc device 1 uses only part of a signal waveform, the disc identification with the optical disc device 1 is hard to be affected by noise to thereby enable exact disc identification to be achieved as compared with the technique in which the whole of the waveform of the focus error signal is used to identify the optical disc 10. This is because, with a smaller range in use of a waveform for disc identification, a probability of intrusion of noise into the range is reduced.

In the optical disc device 1, since a so-called high NA lens having a numerical aperture of 0.8 or more is used as an objective lens 140, the time difference D212 increases because of a large spherical aberration. Hence, the disc identification can be performed more precisely.

In the aforementioned technique using information on the whole of a signal waveform, it is considered that the processing load for disc identification (for example, obtaining information used for disc identification and processing for the information), for example the scale of circuitry or software, becomes inevitably larger. According to the optical disc device 1, however, since a disc is identified based on the time difference D212, the disc identification processing including acquirement of the time difference D212 and the disc identification processing based on that time difference D212 become lighter as compared with the aforementioned technique using the whole of the waveform.

It is understood from Fig. 7 that a deviation in the time axis direction in waveform between the central light FE signal 212A and the peripheral light FE signal S212P is related to a phase difference between both signals S2111A and S212P, and that with increase in the deviation value D212, the phase difference becomes larger. In this regard, the time difference detection means 220 can be referred to as a "phase difference detection means 220", and the mark D212 is used to indicate the phase difference. The phase difference detection means 220 compares the central light 111A and the peripheral light 111P with each other, to be more specific, compares the central light FE signal S212A and the peripheral light FE signal S212P with each other in a focus search operation, to thereby obtain a phase difference D212 between the both signals S212A and S212P, which is a correlation value or a correlation data of a spherical aberration value, and outputs the phase difference D212 as a comparison result signal S222. In this case as well, the effect described above is obtained.

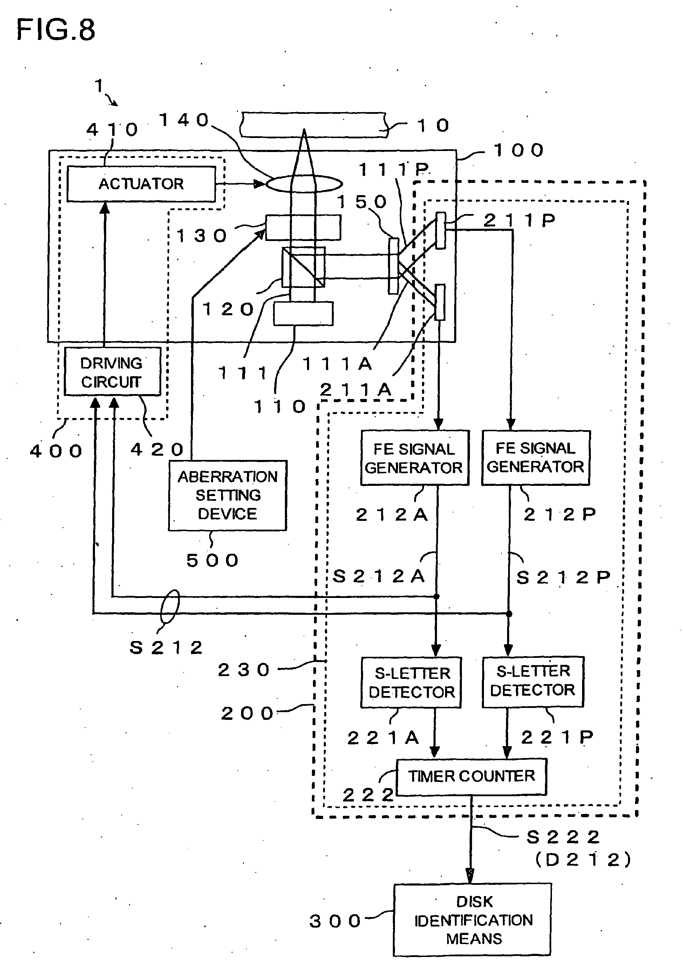

As already described, when the central light FE signal S212A is at a zero level in the middle of the S-letter waveform, the focus of the central light 111A coincides with the information recording surface 12 of the optical disc 10 (see Fig. 1). In a similar manner, when the peripheral light FE signal S212P is at a zero level in the middle of the S-letter waveform, the focus of the peripheral light 111P coincides with the information recording surface 12 of the optical disc 10 (see Fig. 1). Therefore, the time difference D212 at zero levels between the central light FE signal S212A and the peripheral light FE signal S212P (see Fig. 7) is not anything but the time difference (this time difference is hereinafter referred to as a "focus time difference") between the time when the central light 111 A and the time when the peripheral light 111 P respectively coincide with the information recording surface 12. Hence, the mark D212 is used to indicate the focus time difference as well. Fig. 8 shows a block diagram of the optical disc device 1 when viewed in light of such a viewpoint.

By comparing Fig. 8 and Fig. 4, it is understood that the constituents themselves are the same between these figures. However, in Fig. 8, a configuration including the photodetectors 211 A and 211 P, the FE signal generators 212A and 212P, the S-letter detectors 221A and 221P, and the timer counter 222 constitutes the focus time difference detection means 230. The focus time difference detection means 230 is provided in the comparison means 200. By comparing the central light 111A and the peripheral light 111P with each other, to be more specific, by comparing a time point at which the focus of the central light 111A coincides with the information recording surface 12 of the central light 111A (see Fig. 1) and a time point at which the focus of the peripheral light 111 P coincides with the information recording surface 12 in a focus search operation, the focus time difference D212, which is a correlation value or a correlation data of a spherical aberration value, is acquired for outputting the focus time difference D212 as the comparison result signal S222. In such a case as well, the effect described above is obtained.

Note that a so-called knife-edge method may be used for obtaining the central light FE signal S212A and the peripheral light FE signal S212P (the S-letter waveform can also be obtained with this method). Another light division means may be used instead of the hologram 150.

The aforementioned disc identifying technique can be applied to any one of reproduction only, reproduction/recording, and recording only functions. Moreover, the disc identifying technique can also be applied to an optical disc device having plural light sources emitting light with different wavelengths and having optical systems for the respective light sources. A light source 110 that can emit not only laser light for CD, DVD and BL but also for various types of laser light can be applied in the optical disc device 1. Contrary thereto, a light source 110 emitting two or less types of light can be applied, for example, by using a common laser both for DVD and CD.

It is to be noted that, in the aforementioned description, various configurations are omitted because the description has been centered on the technologies for identifying the optical disc 10. For example, as for a reproduction signal, it can be obtained based on one of the central light FE signal S212A and the peripheral light FE signal S212P, or based on the sum of the central light FE signal S212A and the peripheral light signal S212P ((A + P), (B + Q), (C + R) and (D + S).

## Claims

1. An optical disc device (1) comprising:
a light source (110);
an objective lens (140) for illuminating an optical disc (10) with light (111) from the light source;
spherical aberration setting means (130, 500) for correcting a spherical aberration caused by the objective lens (140);
focus control means (400) for performing a focusing operation for moving, in the optical axis direction, a focus position of the light transmitted through the objective lens;
light division means (150) for dividing the light reflected from the optical disc into central light (111A) transmitted through a central part (140A) of the objective lens and peripheral light (111P) transmitted through a peripheral part (140P) of the objective lens;
central light focus error signal generation means (210A) for generating a central light focus error signal (S212A) from the central light; and
peripheral light focus error signal generation means (210P) for generating a peripheral light focus error signal (S212P) from the peripheral light;
**characterized in that**
the optical disc device (1) further comprises time difference detection means (220) and disc identification means (300),
wherein the optical disc device (1) is adapted to cause the spherical aberration setting means (130, 500) to become inoperative and cause the focus control means (400) to control the objective lens (140) so as to perform the focusing operation;
the time difference detection means (220) detects a time difference (D212) at a zero level between the central light focus error signal and the peripheral light focus error signal during the focusing operation; and
the disc identification means (300) identifies a type of the optical- disc based on the time difference.

2. The optical disc device according to claim 1,
wherein the objective lens has a numerical aperture of 0.8 or more.

3. The optical disc device according to claim 1 or 2,
wherein the focusing operation is a focus search operation.

4. The optical disc device according to any one of claims 1 to 3,
wherein the time difference (D212) is obtained from count values counted by a timer counter (222) provided in the time difference detection means (220).

## Patentansprüche

1. Optisches Plattenlaufwerk (1) mit:
einer Lichtquelle (110);
einer Objektivlinse (140) zum Beleuchten einer optischen Platte (10) mit Licht (111) von der Lichtquelle;
Sphärische-Aberrations-Einstelleinrichtungen (130, 500) zum Korrigieren einer durch die Objektivlinse (140) verursachten sphärischen Aberration;
Fokussteuerungseinrichtungen (400) zum Durchführen eines Fokussierungsvorgangs zur Bewegung einer Fokusposition des durch die Objektivlinse übertragenen Lichts in die Richtung der optischen Achse;
Lichtteilungseinrichtungen (150) zum Teilen des von der optischen Platte reflektierten Lichts in zentrales Licht (111A), das durch ein zentrales Teil (140A) der Objektivlinse übertragen wird, und peripheres Licht (111P), das durch ein peripheres Teil (140P) der Objektivlinse übertragen wird;
Zentrallicht-Fokusfehlersignal-Erzeugungseinrichtungen (210A) zum Erzeugen eines Zentrallicht-Fokusfehlersignals (S212A) vom zentralen Licht; und
Peripherlicht-Fokusfehlersignal-Erzeugungseinrichtungen (210P) zum Erzeugen eines Peripherlicht-Fokusfehlersignals (S212P) vom peripheren Licht;
**dadurch gekennzeichnet, dass**
die optische Plattenvorrichtung (1) weiterhin eine Zeitdifferenzerfassungseinrichtung (220) und eine Plattenidentifikationseinrichtung (300) umfasst,
wobei die optische Platteneinrichtung (1) angepasst ist, um zu bewirken, dass die Sphärische-Aberrations-Einstelleinrichtungen (130, 500) funktionsunfähig werden, und die Fokussteuerungseinrichtungen (400) zu bewegen, die Objektivlinse (140) so zu steuern, dass sie den Fokussierungsvorgang durchführt;
die Zeitdifferenzerfassungseinrichtung (220) eine Zeitdifferenz (D212) auf einem Nullpegel zwischen dem Zentrallicht-Fokusfehlersignal und dem Peripherlicht-Fokusfehlersignal während des Fokussierungsvorgangs erfasst; und
die Platterlidentifikationseinrichtung (300) einen Typ der optischen Platte auf der Grundlage der Zeitdifferenz identifiziert.

2. Optische Plattenvorrichtung nach Anspruch 1,
wobei die Objektivlinse eine numerische Apertur von 0,8 oder mehr aufweist.

3. Optische Plattenvorrichtung nach Anspruch 1 oder 2,
wobei der Fokussierungsvorgang ein Fokussuchvorgang ist.

4. Optische Plattenvorrichtung nach irgendeinem der Ansprüche 1 bis 3,
wobei die Zeitdifferenz (D212) aus Zählwerten ermittelt wird, die von einer in der Zeitdifferenzerfassungseinrichtung (220) vorgesehenen Zeitzählvorrichtung (222) gezählt werden.

## Revendications

1. Dispositif de disque optique (1) comprenant :
une source lumineuse (110);
une lentille d'objectif (140) permettant d'éclairer un disque optique (10) avec une lumière (111) provenant de la source lumineuse;
un moyen de réglage d'aberration sphérique (130, 500) permettant de corriger une aberration sphérique provoquée par la lentille d'objectif (140);
un moyen de contrôle de focalisation (400) permettant d'effectuer une opération de focalisation pour déplacer, dans le sens de l'axe optique, une position de focalisation de la lumière transmise grâce à la lentille d'objectif;
un moyen de division de la lumière (150) permettant de diviser la lumière réfléchie par le disque optique en lumière centrale (111A) transmise grâce à une partie centrale (140A) de la lentille d'objectif et en lumière périphérique (111P) transmise grâce à une partie périphérique (140P) de la lentille d'objectif ;
un moyen de génération de signaux d'erreur de focalisation de la lumière centrale (210A) permettant de générer un signal d'erreur de focalisation de la lumière centrale (S212A) à partir de la lumière centrale ; et
un moyen de génération de signaux d'erreur de focalisation de la lumière périphérique (210P) permettant de générer un signal d'erreur de focalisation de la lumière périphérique (S212P) à partir de la lumière périphérique ;
**caractérisé en ce que**
le dispositif de disque optique (1) comprend en outre un moyen de détection de différence temporelle (220) et un moyen d'identification de disque (300),
dans lequel le dispositif de disque optique (1) est adapté pour rendre le dispositif de réglage d'aberration sphérique (130, 500) inopérant et amener le moyen de contrôle de focalisation (400) à contrôler la lentille d'objectif (140) afin d'effectuer l'opération de focalisation;
le moyen de détection de différence temporelle (220) détecte une différence temporelle (D212) à un niveau zéro entre le signal d'erreur de focalisation de la lumière centrale et le signal d'erreur de focalisation de la lumière périphérique durant l'opération de focalisation ; et
le moyen d'identification de disque (300) identifie un type de disque optique sur la base de la différence temporelle.

2. Dispositif de disque optique selon la revendication 1,
dans lequel la lentille d'objectif possède une ouverture numérique de 0.8 ou plus.

3. Dispositif de disque optique selon la revendication 1 ou 2,
dans lequel l'opération, de focalisation est une opération de recherche de focalisation.

4. Dispositif de disque optique selon l'une quelconque des revendications 1 à 3,
dans lequel la différence temporelle (D212) est obtenue à partir des valeurs de comptage comptées par un compteur temporel (222) fourni dans le moyen de détection de différence temporelle (220).
